Europäisches Patentamt

European Patent Office

Office européen des brevets

(11) Publication number: 0 248 352
A2

# EUROPEAN PATENT APPLICATION

(21) Application number: 87107757.4

(22) Date of filing: 27.05.87

(51) Int. Cl.⁴: **C08L 67/02** , C08L 33/04 , C08L 9/00 , C08L 51/04 , C08L 69/00 , C08L 75/04

(30) Priority: 29.05.86 IT 2060586

(43) Date of publication of application:
09.12.87 Bulletin 87/50

(84) Designated Contracting States:
BE DE ES FR GB NL SE

(71) Applicant: AUSIMONT S.p.A.
31, Foro Buonaparte
I-20121 Milano(IT)

(72) Inventor: Chiolle, Antonio
156, Via Darsena
I-44100 Ferrara(IT)
Inventor: Andreoli, Gaetano
41, Via Marchesi
I-45030 Occhiobello S.M.Maddalena
Rovigo(IT)

(74) Representative: Weinhold, Peter, Dr. et al
Patentanwälte Dr. V. Schmied-Kowarzik
Dipl.-Ing. G. Dannenberg Dr. P. Weinhold Dr.
D. Gudel Dipl.-Ing. S. Schubert Dr. P. Barz
Siegfriedstrasse 8
D-8000 München 40(DE)

(54) Polyester-based shock-resistant compositions and process for their preparation.

(57) Polyester-based shock-resistant compositions, endowed with a high shock resistance, in particular at low temperatures, comprising:
a) a matrix constituted by one or more saturated polyesters;
b) an elastomer constituted by butadiene or acrylic rubbers; and
c) a block-copolyester.

EP 0 248 352 A2

## POLYESTER-BASED SHOCK-RESISTANT COMPOSITIONS AND PROCESS FOR THEIR PREPARATION

The present invention relates to shock-resistant compositions based on polyesters, and to the process for their preparation.

More particularly, the present invention relates to polyester-based polymeric compositions endowed with a high shock resistance, in particular at low temperatures.

In U.S. Patent 3,919,353 compositions based on saturated polyesters have been disclosed and claimed, the shock resistance of which was enhanced by dispersing into them an elastomeric phase constituted by butadiene rubbers, such as, e.g., polybutadiene or butadiene/styrene copolymers, or by polyolefinic rubbers, such as, e.g., saturated or unsaturated ethylene/propylene copolymers, which were previously crosslinked and modified by a grafting reaction with polar monomers. In grafted and crosslinked elastomer, the crosslinked phase is present in an amount of at least 30%, and, preferably, of at least 50%.

The shock resistance of such compositions, at room temperature, is considerably improved as compared to that of polyesters without such an elastomeric phase; however, their low-temperature shock resistance, in particular within the range of from 0°C to -40°C, is not completely satisfactory for some applications.

New shock-resistant, polyester-based compositions have been found now, and are the object of the present invention, which maintain high characteristics of shock resistance also at low temperatures.

The compositions of the present invention are characterized in that they comprise:

a) from 55 to 98% by weight of one or more saturated polyesters;

b) from 1 to 35% by weight of butadiene and/or acrylic rubber; and

c) from 1 to 10% by weight of an elastomeric copolyester.

The compositions of the present invention can be obtained by dispersing and/or blending the above-mentioned (a), (b) and (c) components, in the molten state, or as solutions in suitable solvents, which are subsequently removed, by a whatever known technique.

The preferred process consists in operating at such temperatures as to have the (a) and (c) components in the molten state, blending them with each other, and then dispersing into them the (b) component in form of small-size particles, preferably with an average diameter comprised within the range of from 0.1 to 2 microns, by using well-known equipment for preparation of polymeric blends, such as mixers, extruders, and so forth.

During the preparation of these compositions, several additives, such as stabilizers, antioxidants, pigments, dyes, flame-proofing agents, lubricants, organic and inorganic reinforcing agents (carbon fibres or fibreglass, aramidic fibres, talc, asbestos, etc.), nucleating agents, and so on, may be added.

The saturated polyesters (a), used in the compositions of the present invention, are thermoplastic resins having an intrinsic viscosity of at least 0.4 dl/g (as measured on a 1:1 phenol/tetrachloroethane mixture), obtained from an aromatic or cycloaliphatic bicarboxylic acid, with a diol having the formula:

HO - R - OH (I)

wherein R is a linear or branched alkylene radical, containing from 2 to 20 C atoms, preferably from 2 to 6 C atoms, or an arylene or cycloalkylene radical containing from 6 to 20 C atoms.

Examples of preferred bicarboxylic acids are terephthalic acid, isophthalic acid and cyclohexane-1,4-bicarboxylic acid; examples of preferred diols are ethanediol, propanediol, butanediol and hexanediol.

Some examples of preferred saturated polyesters are poly(ethyleneterephthalate), poly-(propyleneterephthalate), poly(butyleneterephthalate) and poly(hexamethylene-cyclohexane-1,4-dicarboxylate) and their blends.

These polyesters can be produced according to known techniques of polycondensation or polytransesterification.

The saturated polyesters used in the preparation of the compositions of the present invention can possibly contain, however in amounts smaller than 15% by mol in respect to the aromatic or cyclo-aliphatic acids, aliphatic bicarboxylic acids of from 4 to 20 C atoms. As examples of aliphatic bicarboxylic acids which can be used, adipic acid and sebacic acid may be mentioned.

The (b) component used in the compositions of the present invention can be a butadiene rubber, or an acrylic rubber.

By the term "butadiene rubber", any elastomeric polymer is meant, which is obtained either by direct polymerization, or by polymerization and subsequent grafting reaction, of butadiene and/or isoprene with ethylenically unsaturated monomers, such as, e.g.: styrene, acrylonitrile, methacrylonitrile, acrylic and methacrylic esters, acrylic and methacrylic acid, maleic acid and anhydride, maleic and fumaric esters, alkylstyrenes, in any combinations with one another. Typical examples of butadiene rubbers are the

2

butadiene/styrene/acrylonitrile or butadiene/styrene/methylmethacrylate terpolymers, as well as the same terpolymers, or polybutadiene, or natural rubber, or butadiene/styrene or butadiene/acrylonitrile copolymers, subsequently modified by grafting reaction with a polar monomer, such as acrylonitrile, styrene, acrylic or methacrylic esters, methacrylic acid, maleic acid and anhydride, and so forth.

By the term "acrylic rubbers", any elastomeric polymer is meant, which is obtained, either by direct polymerization, or by polymerization and subsequent grafting reaction, of alkyl-esters of acrylic or methacrylic acid, containing from 1 to 10 C atoms preferably from 1 to 4 C atoms in their alkyl chain, such as, e.g., ethyl acrylate, butyl acrylate, methyl methacrylate and cyclohexyl methacrylate. Together with these monomers, for the synthesis of the above-said acrylic rubbers, also other ethylenically unsaturated monomers can be used, such as, e.g.: styrene, alkylstyrenes, acrylonitrile, methacrylonitrile, and/or, in an amount of from 0.1 to 5% by weight, such bi-or poly-functional monomers (crosslinking agents) as: ethyleneglycol acrylate or methacrylate, glycidyl methacrylate, allyl methacrylate, diallylmaleate, diallylphthalate, hydroxyethyl methacrylate, etc.. Typical examples of acrylic rubbers are the polymers obtained from alkyl-esters of acrylic or methacrylic acid, such as butyl acrylate, ethyl acrylate and methyl methacrylate, possibly containing minor amounts, e.g., from 10 to 30% by weight, of styrene or acrylonitrile and small amounts, e.g., from 0.5 to 3% by weight, of ethyleneglycol methacrylate or allyl methacrylate.

Said (b) rubbers are characterized by a main glass transition temperature ($T_g$) lower than 0°C, and by a crosslinking degree (gel content) comprised within the range of from 0 to 99% by weight, preferably of from 50 to 99% by weight.

The crosslinking may be already present in the rubber before this is blended with the other components, or it can be achieved during said blending, with the possible further addition of monomers of the above indicated types and in the presence of free-radical initiators, or with addition of suitable other crosslinking agents, such as, e.g., diisocyanate, diamines, diols, and so on.

The (c) component used in the compositions of the present invention is a block-copolyester having a melting point lower than 190°C, obtained by means of polycondensation or transesterification of an aromatic carboxylic acid with a diol having the above shown formula (I), and with a polyetherglycol having formula:

HO - $(R_1-O)_m$-H (II)

wherein $R_1$ is a linear or branched alkylene radical, containing from 2 to 20 C atoms, preferably from 2 to 6 C atoms and $\underline{m}$ is an integer higher than 2, and such that the molecular weight of the polyetherglycol is comprised within the range of from 300 to 10,000, preferably of from 600 to 4,000.

Examples of suitable polyetherglycols are polyoxytetramethyleneglycol, polyoxyethyleneglycol, polyoxypropyleneglycol, etc., or mixtures thereof.

Said block-copolyesters have a content of rigid segments - by which term, the segments being meant which derive from the esterification of the acid with the diol having formula (I) -, comprised within the range of from 10 to 75% by weight; furthermore the ratio of the number of C atoms to the number of oxygen atoms present in the polyetherglycol (II) is preferably equal to, or higher than, 2.

The lower is the content of rigid segments in the compositions of the present invention, the greater is the effect of improvement of the resilience thereof, caused by the presence of copolyesters (c). In particular, a content of rigid segments in the copolyesters, comprised within the range of from 30 to 50% by weight, allows a favourable compromise to be obtained between stiffness and shock resistance and shape stability on heating.

To the compositions of the present invention other thermoplastic materials can be possibly added, such as, e.g.: any known type of polycarbonate, in particular that obtained from bisphenol A and phosgene; any known type of thermoplastic polyurethane, in particular that obtained from methylene-bis(phenyl-isocyanate) and polyether-glycols and/or polyester-glycols; furthermore, poly(vinyl chloride), polyamides, polystyrenes, ABS resins, etc..

The amount of said thermoplastic materials may vary within a wide range. In particular, amounts of thermoplastic material lower than 25%, preferably comprised within the range of from 1 to 10% by weight, relatively to the total composition, are recommended.

The compositions of the present invention are mainly characterized by a good low-temperature shock resistance, in particular at temperatures of from 0°C to -40°C; they are furthermore endowed with very good resistance to gasolines, to oils, to light and to thermo-oxidation. Thanks to these peculiar characteristics, the compositions of the present invention are particularly suitable for use in some fields, such as, e.g., in car and motorcycle field (bumpers, fenders, spoilers, side body mouldings, protective helmets, etc.) and in sport field (ski-boots, soles for ice skates, etc., wherein the above mentioned characteristics have a considerable importance.

To the purpose of illustrating the present invention more extensively and in greater detail, some examples are now supplied, which in no way are to be regarded as being limitative thereof.

3

EXAMPLES 1-4

By means of a twin-screen extruder MARIS TM 33, at the temperature of 260°C, and with a screw revolution speed of 150 rpm, blends are prepared, which are constituted by:

a)polybutyleneterephthalate having a viscosity of 1.4 dl/g;

b) grafted butadiene/styrene/methylmethacrylate terpolymer with a crosslinking degree (gel content) of 94% by weight, and a glass transition temperature (T$_g$) = -80°C, manufactured by Rohm and Haas under the tradename KM 653; and

c) copolyesters obtained from terephthalic acid, 1,4-butanediol and polyoxytetramethyleneglycol, with a molecular weight of about 1000, and having different contents of rigid segments, as reported in the Table 1. During the preparation of said blends, furthermore antioxidants, i.e. 0.4% of IRGANOX 1010 and 0.4% of IRGAFOS 168, are also added.

The weight ratios of the blends components are reported in Table 1.

Rods four the extruder, are pelletized and dried 2-4 hours at 80-140°C. The material is subsequently injection-moulded at 260°C to get suitable specimens for properties determination, according to ASTM standards.

Such properties are reported in Table 1:

TABLE 1

| Composition | Example No. | | | |
|---|---|---|---|---|
| | 1 | 2 | 3 | 4 |
| a) Polybutyleneterephthalate | 74.2 | 74.2 | 74.2 | 74.2 |
| b) Rubber KM 653 | 25 | 20 | 20 | 20 |
| c) Copolyester containing: | | | | |
| 33% of rigid segments | | 5 | | |
| 46% of rigid segments | | | 5 | |
| 66% of rigid segments | | | | 5 |
| d) Antioxidants | 0.8 | 0.8 | 0.8 | 0.8 |

0 248 352

| PROPERTIES | METHOD | UNITS | EXAMPLE No | | | |
|---|---|---|---|---|---|---|
| Specific Gravity @ 23°C | D.720 | g/cm$^3$ | 1.21 | 1.21 | 1.25 | 1.25 |
| Yield Strength | D.638 | MPa | 35 | 36 | 35 | 35 |
| VICAT | D.1525 | °C | 123 | 126 | 130 | 133 |
| Flexural Modulus @ 23°C | D.790 | MPa | 1450 | 1440 | 1430 | 1550 |
| @ 80°C | D.790 | MPa | 250 | 250 | 260 | 280 |
| IZOD @ +23°C | D.256 | J/m | 820 PR | 925 PR | 910 PR | 890 PR |
| @ -15°C | D.256 | J/m | 190 | 650 PR | 820 | 260 |
| @ -40°C | D.256 | J/m | 100 | 450 | 250 | 150 |
| Distortion Temperature (HDT) under 4.5 kg | D.648 | °C | 80 | 81 | 85 | 97 |
| under 18.2 kg | D.648 | °C | 45 | 47 | 47 | 48 |

PR = Partially cracked.

EXAMPLES 5-7

By operating under the same conditions as of Examples 1-4, granules are prepared from blends consisting of:

a) polybutyleneterephthalate having a viscosity of 1.4 dl/g;

b) polybutylacrylate grafted with methylmethacrylate having a gel content of 91% by weight, and a glass transition temperature ($T_g$) of -50°C, manufactured by Rohm and Haas under the tradename KM 323 B; and

c) copolyesters obtained from terephthalic acid, 1,4-butanediol and polyoxytetramethyleneglycol, with a molecular weight of about 1000, and having different contents of rigid segments, as reported in the Table 2.

During the preparation of these blends, 0.8% by weight of antioxidants, as already specified in the foregoing Examples, were also added.

The weight ratios between the blend components and the properties as determined on the specimens obtained from said blends, are reported in Table 2.

5

TABLE 2

| Composition | | | Example No. 5 | 6 | 7 |
|---|---|---|---|---|---|
| a) Polybutyleneterephthalate | | | 74.2 | 74.2 | 74.2 |
| b) Rubber KM 323 B | | | 25 | 20 | 20 |
| c) Copolyester containing: | | | | | |
| 33% of rigid segments | | | | 5 | |
| 46% of rigid segments | | | | | 5 |
| d) Antioxidants | | | 0.8 | 0.8 | 0.8 |
| PROPERTIES | METHOD | UNIT | | | |
| Specific Gravity @ 23°C | D.720 | g/cm$^3$ | 1.22 | 1.21 | 1.22 |
| Yield Strength | D.638 | MPa | 38 | 35 | 37 |
| VICAT | D.1525 | °C | 120 | 110 | 120 |
| Flexural Modulus | | | | | |
| @ 23°C | D.790 | MPa | 1650 | 1550 | 1620 |
| @ 80°C | D.790 | MPa | 360 | 320 | 340 |
| IZOD | | | | | |
| @ +23°C | D.256 | J/m | 600 PR | 820 PR | 650 PR |
| @ -15°C | D.256 | J/m | 200 | 650 PR | 450 PR |
| @ -40°C | D.256 | J/m | 100 | 160 | 140 |
| Distortion Temperature (HDT) | | | | | |
| under 4.5 kg | D.648 | °C | 85 | 75 | 84 |
| under 18.2 kg | D.648 | °C | 48 | 45 | 46 |

PR = Partially cracked.

6

EXAMPLES 8-11

Examples 1-4 are repeated, with polybutyleneterephthalate being replaced by a mixture of polybutyleneterephthalate/polyethyleneterephthalate in 40:60 weight ratio.

The compositions of the blends, and the properties of the specimens obtained from said blends are reported in following Table 3:

TABLE 3

| Composition | Example No. | | | |
|---|---|---|---|---|
| | 8 | 9 | 10 | 11 |
| a) 40:60 polybutylene-<br>terephthalate/poly-<br>ethyleneterephthal-<br>late blend | 74.2 | 74.2 | 74.2 | 74.2 |
| b) Rubber KM 653 | 25 | 20 | 20 | 20 |
| c) Copolyester containing: | | | | |

| | | | | | | |
|---|---|---|---|---|---|---|
| 33% of rigid segments | | | 5 | | | |
| 46% of rigid segments | | | | 5 | | |
| 66% of rigid segments | | | | | | 5 |
| d) Antioxidants | | | 0.8 | 0.8 | 0.8 | 0.8 |

| PROPERTIES | METHOD | UNIT | | | | |
|---|---|---|---|---|---|---|
| Specific Gravity @ 23°C | D.720 | g/cm$^3$ | 1.23 | 1.225 | 1.225 | 1.227 |
| Yield Strength | D.638 | MPa | 40 | 38 | 37 | 39 |
| VICAT | D.1525 | °C | 120 | 125 | 127 | 130 |
| Flexural Modulus @ 23°C | D.790 | MPa | 1550 | 1480 | 1570 | 1590 |
| @ 80°C | D.790 | MPa | 300 | 260 | 290 | 290 |
| IZOD @ +23°C | D.256 | J/m | 700 | 900 | 800 | 850 |
| @ -15°C | D.256 | J/m | 170 | 750 | 600 | 550 |
| @ -40°C | D.256 | J/m | 80 | 600 | 450 | 320 |
| Distortion Temperature ( HDT ) under 4.5 kg | D.648 | °C | 80 | 77 | 79 | 78 |
| under 18.2 kg | D.648 | °C | 54 | 49 | 50 | 52 |

## Examples 12-15

By operating under the same conditions as of Examples 1-4, blends are prepared, which consist of:

a) polybutyleneterephthalate having a viscosity of 1.4 dl/g;

b) butadiene rubber of KM 653 type, manufactured by Rohm and Haas;

c) copolyester obtained from terephthalic acid, 1,4-butanediol and polyoxytetramethyleneglycol, having a molecular weight of about 1000, and having a content of rigid segments of 33%; and

d) polycarbonate obtained from phosgene and bisphenol A, manufactured by ENICHEM under the tradename SINVET 271, or thermoplastic polyurethane marketed by UPJOHN under the tradename ISOPLAST 201.

The compositions of the blends and the properties of the specimens obtained from said blends are reported in following Table 4.

TABLE 4

| Composition | | | Example No. | | | |
|---|---|---|---|---|---|---|
| | | | 12 | 13 | 14 | 15 |
| a) Polybutyleneterephthalate | | | 67.2 | 67.2 | 67.2 | 67.2 |
| b) Rubber KM 653 | | | 25 | 20 | 25 | 20 |
| c) Copolyester | | | | 5 | | 5 |
| d) Polycarbonate SINVET 271 | | | 7 | 7 | | |
| Polyurethane ISOPLAST 201 | | | | | 7 | 7 |
| d) Antioxidants | | | 0.8 | 0.8 | 0.8 | 0.8 |
| PROPERTIES | METHOD | UNIT | | | | |
| Specific Gravity @ 23$^{\circ}$C | D.720 | g/cm$^3$ | 1.198 | 1.208 | 1.200 | 1.203 |
| Yield Strength | D.638 | MPa | 42 | 34 | 42 | 32 |
| VICAT | D.1525 | $^{\circ}$C | 120 | 135 | 125 | 132 |
| Flexural Modulus | | | | | | |
| @ 23$^{\circ}$C | D.790 | MPa | 1350 | 1500 | 1420 | 1380 |
| @ 80$^{\circ}$C | D.790 | MPa | 220 | 250 | 240 | 230 |
| IZOD | | | | | | |
| @ +23$^{\circ}$C | D.256 | J/m | 980 PR | 1050 PR | 200 | 850 PR |
| @ -15$^{\circ}$C | D.256 | J/m | 900 PR | 1030 PR | 180 | 880 PR |
| @ -40$^{\circ}$C | D.256 | J/m | 300 | 900 PR | 80 | 350 PR |
| Distortion Temperature (HDT) | | | | | | |
| under 4.5 kg | D.648 | $^{\circ}$C | 88 | 75 | 78 | 70 |
| under 18.2 kg | D.648 | $^{\circ}$C | 49 | 46 | 52 | 50 |

PR = Partially cracked.

## Claims

1. Shock-resistant polymeric compositions comprising:
   a) from 55 to 98% by weight of one or more saturated polyesters;
   b) from 1 to 35% by weight of butadiene and/or acrylic rubber; and
   c) from 1 to 10% by weight of an elastomeric copolyester.

2. Polymeric compositions according to claim 1, wherein the butadiene rubber or the acrylic rubber is in the form of particles having a size comprised within the range of from 0.1 to 2 microns.

3. Polymeric compositions according to claim 1 or 2, wherein the saturated polyester has an intrinsic viscosity of at least 0.4 dl/g and is obtained from an aromatic or cycloaliphatic bicarboxylic acid, with a diol having the formula:

HO - R - OH (I)

wherein R is a linear or branched alkylene radical, containing from 2 to 20 C atoms, or an arylene or cycloalkylene radical containing from 6 to 20 C atoms.

4. Polymeric compositions according to claim 3, wherein the saturated polyester contains an amount lower than 15% by mol, in respect to the aromatic or cycloaliphatic bicarboxylic acid, of an aliphatic bicarboxylic acid contaninig from 4 to 20 C atoms.

5. Polymeric compositions according to any of preceding claims from 1 to 4, wherein the butadiene rubber or the acrylic rubber has a glass transition temperature $(T_g)$ lower than 0°C, and a crosslinking degree comprised within the range of from 0 to 99% by weight, preferably of from 50 to 99% by weight.

6. Polymeric compositions according to claim 5, wherein the butadiene rubber is obtained either by direct polymerization, or by polymerization and subsequent grafting reaction, of butadiene and/or isoprene with an ethylenically unsaturated monomer selected from styrene, acrylonitrile, methacrylonitrile, acrylic and methacrylic esters, acrylic and methacrylic acid, maleic acid and anhydride, maleic and fumaric esters, alkylstyrenes, in any combinations with one another and
the acrylic rubber is obtained either by direct polymerization, or by polymerization and subsequent grafting reaction, of acrylic or methacrylic alkyl-esters containing from 1 to 10 C atoms in their alkyl chain, possibly in combination with other ethylenically unsaturated monomers, and with from 0.1 to 5% by weight, of bi-or polyfunctional monomers, respectively.

7. Polymeric compositions according to any of preceding claims from 1 to 6, wherein
the elastomeric copolyester is a block-copolyester having a melting point lower than 190°C, and is obtained by polycondensation or transesterification of an aromatic bicarboxylic acid with a diol havin a formula (I), and with a polyetherglycol having formula:

HO - $(R_1-O)_m$-H (II)

wherein $R_1$ is a linear or branched alkylene radical, containing from 2 to 20 C atoms, and m is an integer higher than 2, and such that the molecular weight of the polyetherglycol is comprised within the range of from 300 to 10,000, preferably of from 600 to 4,000.

8. Polymeric compositions according to claim 7, wherein the block-copolyester has a content of rigid segments comprised within the range of from 10 to 75% by weight, preferably of from 30 to 50% by weight, and a ratio of the number of C atoms to the number of oxygen atoms in the flexible segments is equal to or higher than 2.

9. Polymeric compositions according to any of preceding claims from 1 to 8, characterized in that they can contain a further thermoplastic material, e.g. polycarbonate or thermoplastic polyurethane, in an amount lower than 25%, preferably of from 1 to 10% by weight, relatively to total composition.

10. Polymeric compositions according to any of preceding claims from 1 to 9, characterized in that they contain various additives, such as: stabilizers, antioxidants, pigments, dyes, flame-proofing agents, lubricants, organic and inorganic reinforcing agents, and nucleating agents.